# EUROPEAN PATENT SPECIFICATION

(11) **EP 0 647 931 B1**
(45) Date of publication and mention of the grant of the patent: **10.03.1999**
(21) Application number: 94305960.0
(22) Date of filing: 11.08.1994
(51) Int. Cl.: G09G 1/16

(54) **High speed method and apparatus for generating animation by means of a three-region frame buffer and associated region pointers**
Verfahren und Einrichtung zum Generieren von Animation mit hoher Geschwindigkeit mittels eines drei Bereiche umfassenden Pufferspeichers und assoziierten Bereichszeigern
Procédé et appareil pour la génération à grande vitesse d'animation à l'aide d'une mémoire tampon ayant trois domaines et pointeurs de domaines associés

(30) Priority: 13.08.1993 US 106281
(43) Date of publication of application: 12.04.1995
(73) Proprietor: SUN MICROSYSTEMS, INC., Mountain View, CA 94043 (US)
(72) Inventor: Forrest, Craig S., San Francisco, California 94107 (US); Frank, Edward H., Portola Valley, California 94028 (US); Naughton, Patrick J., Palo Alto, California 94036 (US)
(74) Representative: Wombwell, Francis

(56) References cited:
- EP-A- 0 265 643
- EP-A- 0 403 122
- US-A- 4 961 071
- US-A- 4 988 985
- IBM TECHNICAL DISCLOSURE BULLETIN, vol. 30,no. 3, August 1987 NEW YORK US, pages 1266-1268, 'Three-buffer Display System for Realtime Animation'
- IBM TECHNICAL DISCLOSURE BULLETIN, vol. 29,no. 1, June 1986 NEW YORK US, pages 392-393, 'CRT Video Storage Access Method'

## Description

### BACKGROUND OF THE INVENTION

### 1. Field of the Invention:

This invention relates to the field of frame buffers for computer systems. More particularly, to a method and apparatus for quickly copying information from a first region of memory in a frame buffer to a second region of memory in the frame buffer.

### 2. Art Background:

Many computer systems use a region of memory called a frame buffer for storing data that is to be displayed on a graphics display screen. A display control system reads the information in the frame buffer line-by-line, converts the information into an analog video signal using a digital to analog converter (DAC), and transmits the analog video signal to a display screen. The line-by-line scanning generally beginning at a region in the frame buffer corresponding to the upper left-hand corner of the display screen and continuing to the lower right-hand corner.

Typically, a frame buffer is constructed of video random access memory (VRAM) devices that differ from conventional dynamic random access memory (DRAM) devices by having two access ports instead of just one access port. A first access port, called a random access port, provides conventional random access to the VRAM such that a central processing unit coupled to the VRAM may read or write to any memory location in the VRAM. A second port, called a serial access port, provides simultaneous serial access to the VRAM such that a device coupled to the serial port can shift data in or out of the VRAM. A display circuit usually accesses the serial port to furnish pixel data to the circuitry controlling the output display. In such a configuration, a central processing unit can write to the VRAM while a display circuit continually furnishes information to an output display.

To animate objects on a display screen coupled to a frame buffer based display system, animation software renders a series of frames with slight picture changes in each frame. To provide smooth animation, approximately 15 to 30 new frames should be displayed each second. As the picture in one frame changes to the picture in the next frame, continuous motion is presented. To accomplish this, the frame buffer must be continually updated.

The ability of a frame buffer to both receive information and transfer that information to an output display simultaneously causes certain difficulties. If the animation software writes to frame buffer memory while the display controller is scanning the image in the frame buffer memory to a display, then the display may present information from more than one animation frame at time. This problem is referred to as frame tear. Frame tears are only important where motion from one frame to the next causes the elements presented on the display to be obviously distorted. When this occurs, the distortion caused may be extremely disconcerting to the viewer.

To eliminate frame tears, certain computer systems utilize a system referred to as double buffering. A double buffered system provides two regions of memory in the frame buffer wherein each region of memory may furnish pixel information to the circuitry controlling the output display. A first region of memory provides a first animation frame to the output display, and no changes are made in that memory region while it provides information to the display screen. While the first memory region is displayed on the display screen, animation software renders the next animation frame in the second region of memory. When the animation software completes the next animation frame the display is changed such that the second region of memory becomes the displayed frame and the first region of memory becomes the "work" region in which the animation software renders the next animation frame. In this manner, no pixel information is ever written to the region of memory that is displayed on the display screen. The effect of writing to the non-displayed buffer is that frame tears cannot occur.

When animating objects using a double-buffered animation frame, the CPU must render every object to be displayed in the work region for each new frame of animation. If the animated objects are being rendered on top of a background scene, the entire background scene must also be redrawn by the CPU before it can render the animated objects. To provide high-quality real time animation, the rendering of the background and the animated objects for an animation frame must be done approximately 15 to 30 times per second. Real-time animation therefore usually requires a very fast computer processor. Prior art arrangements are disclosed in IBM Technical Disclosure Bulletin, vol. 30, no. 3, August 1987, pages 1266 - 1268 entitled "Three-buffer Display System for Realtime Animation" and in IBM Technical Disclosure Bulletin, vol. 29, no.1, June 1986, pages 392 - 393; entitled CRT Video Storage Access Method".

### SUMMARY OF THE INVENTION

It is therefore an object of the present invention to provide an improved display control system that reduces the amount of processor speed required to provide real-time animation.

According to the present invention there is provided a method an apparatus for generating and displaying a sequence of animation frames, as set forth in claims 1 and 6 appended hereto, respectively.

The method and apparatus described herein accomplish this object by copying an entire background image frame from a background region of memory in a frame buffer into a new frame region of memory in the frame buffer. The apparatus operates when requested by the central processing unit of the computer system. The central processing unit requests a background copy by setting a new frame register in the copy apparatus to point to an empty region of memory and setting a bit in a control register. The apparatus performs the background copy without requiring any processing resources from the central processing unit.

### BRIEF DESCRIPTION OF THE DRAWINGS

The objects, features, and advantages of the present invention will be apparent to one skilled in the art in view of the following detailed description in which:

**FIGURE 1** illustrates a conventional video random access memory device (VRAM).

**FIGURE 2** illustrates a block diagram of a conventional computer display system that uses a frame buffer comprised of VRAM.

**FIGURES 3a** and **3b** illustrate how a video signal scans down a display screen.

**FIGURE 4** illustrates a block diagram of the computer display system of the present invention.

**FIGURE 5** illustrates a memory map of the VRAM address space as used by the display control system of the present invention.

**FIGURE 6** illustrates a flow diagram of the display logic in the display control system of the present invention.

**FIGURE 7** illustrates a flow diagram of the background copy logic in the display control system of the present invention.

**FIGURES 8a** through **8m** illustrate how the display control system of the present invention is used to produce real time animation.

### DETAILED DESCRIPTION OF THE INVENTION

A computer display system with a fast copy means is disclosed. In the following description, for purposes of explanation, specific nomenclature such as icons, displays, cursors, reticle, etc. is set forth to provide a thorough understanding of the present invention. However, it will be apparent to one skilled in the art that these specific details are not required in order to practice the present invention. In other instances, well known circuits and devices are shown in block diagram form in order not to obscure the present invention unnecessarily.

### A Video Random Access Memory

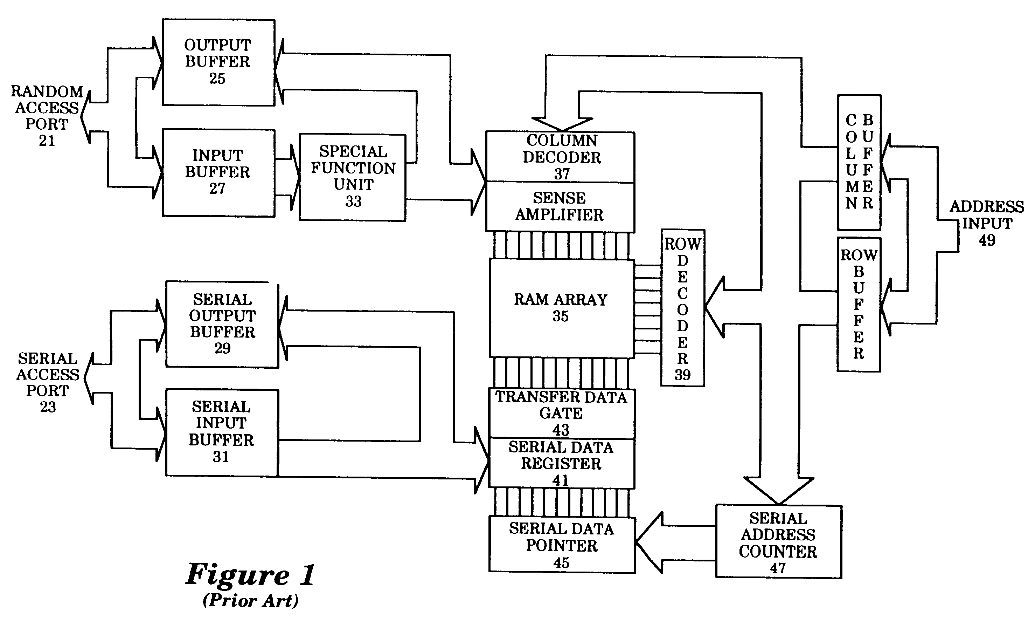

Referring to **Figure 1**, a simplified block diagram of a typical Video Random Access Memory (VRAM) device is illustrated. In the center of the VRAM is a dynamic random access memory array **35** that is used to store data. The RAM array **35** is organized into a set of rows and columns such that each memory location in the RAM array **35** is defined by a row address and a column address. The memory in the RAM array **35** of **Figure 1** can be accessed by two different access ports: a random access port **21** and a serial access port **23**.

The random access port **21** is usually used by a central processing unit (CPU) (not shown) in a computer system to read and write to the video memory. The CPU generates images on a display screen by writing image patterns in the VRAM array **35** through the random access port **21**. To access a specific memory location in the VRAM array **35**, the CPU first generates an address that is latched in through the address lines **49**. The address is split into a row address and a column address. The row decoder **39** and column decoder **37** use the row address and column address to access a specific memory location in the RAM array **35**. The CPU then either writes data to the input buffer **27** or reads data from output buffer **25** depending upon if the memory access is a write access or a read access.

The serial access port **23** of the VRAM is usually used by a display control system (not shown) in a computer system to read the image in the VRAM and send the image to a display. The display control system accesses the data in the video memory by first providing a row address to the address input **49** and requests the VRAM to transfer the entire memory row into the serial data register **41**. The row decoder **39** selects a row in the RAM array **35** using the row address and transfers the selected row into the serial data register **41**. The display control system then has the VRAM shift the data in the serial data register **41** out through serial output buffer **29** to the serial access port **23**. A digital-to-analog converter (not shown) connected to the serial access port **23** uses the data to generate a video signal. The analog video signal drives a computer display.

In some devices that use VRAMs, such as a video frame grabber, the serial access port **23** is used as an input port instead of an output port. Such devices shift video information that has been converted into digital data into the serial data register **41** through serial input buffer **31**. The device then provides a destination row address to the address input **49**. The VRAM writes the digital information in the serial data register **41** into a row of the RAM array **35** selected by the row decoder **39** using the destination row address. Thus the serial data register **41** can be used to write data into the video memory array **35** as well as read information out of the video memory array **35**.

### A Conventional Display Control System

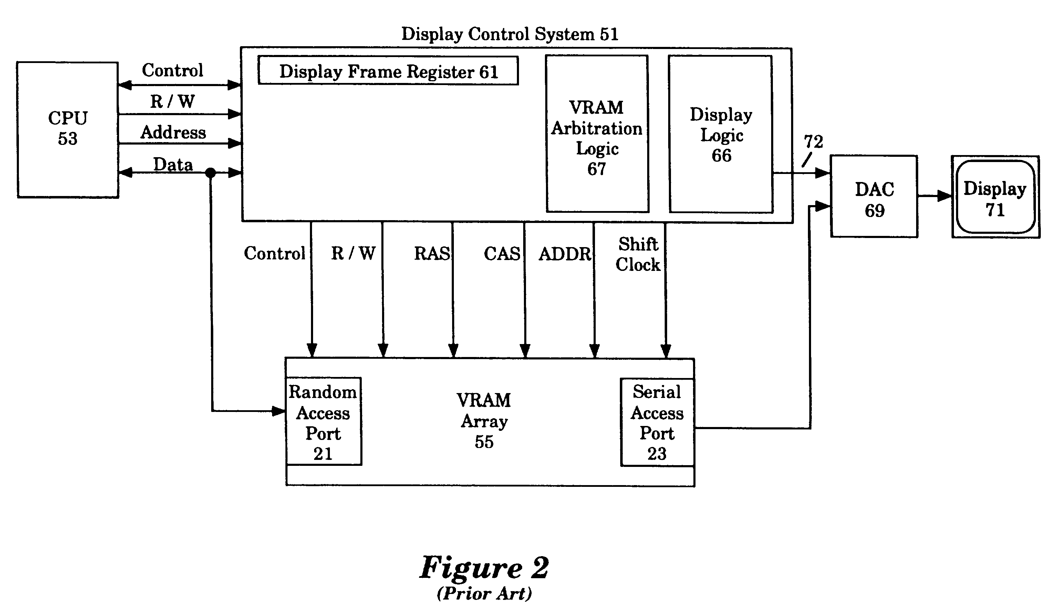

**Figure 2** illustrates a typical prior art computer display system. The computer display system comprises a central processing unit (CPU) **53**, a display control system **51**, a VRAM array **55**, a digital to analog converter (DAC) **69**, and a display screen **71**. The VRAM array **55** comprises a number of individual VRAM devices, such as the VRAM device disclosed in **Figure 1**, as is well known in the art.

The main component of the computer display system illustrated in **Figure 2** is the display control system **51**. The display control system **51** is coupled to the CPU **53** such that the CPU **53** can control the display control system **51** using a set of memory-mapped control registers. The display control system **51** is comprised of two main logic units: the display logic **66** and the VRAM arbitration logic **67**.

The display logic **66** accesses a logically rectangular region of memory in the VRAM array **55** that defines an image to display on the display screen **71**. The display frame register **61** contains the starting address of the frame region within the VRAM array **55**. The display logic **66** generates a video timing signal **72**. The display logic **66** uses the display frame register **61** to access the frame region in the VRAM array **55** in synchronization with the video timing signal **72**. The display logic **66** shifts the data describing an image out of the VRAM array **55** through the serial access port **23** to a digital-to-analog converter (DAC) **69**. The display logic **66** also provides the video timing signal **72** to the digital-to-analog converter (DAC) **69**.

The digital-to-analog converter (DAC) **69** combines the video timing signal **72** and the image data shifted out of the VRAM array **55** to generate an analog video signal. The analog video signal drives a computer display **71**.

The VRAM arbitration logic **67** in the display control system **51** arbitrates between VRAM access requests from the CPU **53** and the display logic **66**. The VRAM arbitration logic **67** gives the display logic **66** priority such that if there is a conflict, the display logic **66** gets to access the VRAM array **55**. Since the display logic **66** must provide information from the VRAM in synchronization with the video timing signal **72**, the VRAM arbitration logic **67** gives priority to the display logic **66**.

### Display Control System with Fast Frame Copy

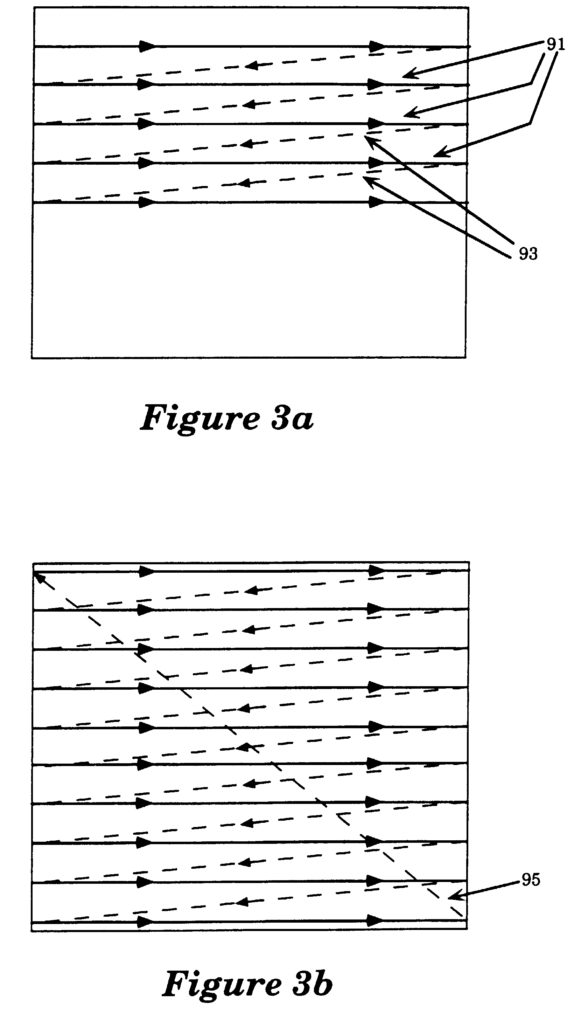

**Figures 3a** and **3b** provide a simplified conceptual illustration of a video signal scanning down a video display screen. Referring to **Figure 3a**, a video signal scans the display screen starting from the upper left corner. The video signal scans a line of information as it moves left to right across each horizontal scan line **91**. At the end of each scan line, a horizontal retrace **93** moves the video signal back to the left side of the display screen. When the video signal reaches the bottom of the display, a vertical retrace **95** moves the video signal back to the top of the display screen.

During the time periods that the video signal is executing a horizontal retrace **93** or a vertical retrace **95** no data is displayed on the display. Therefore, during the horizontal retrace and vertical retrace periods the display logic **66** in a typical display control system **51** does not access the VRAM array **55**. Since the display control system **51** does not access the VRAM during the retrace periods, another device can use the serial data register **41**, as illustrated **Figure 1**, during the retrace periods.

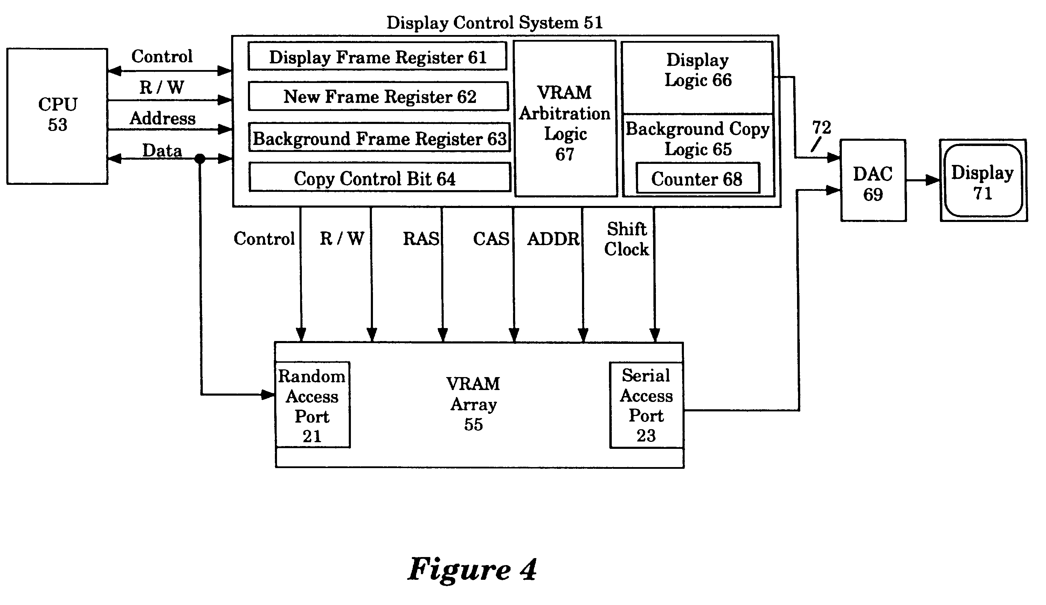

In the preferred embodiment, the present invention uses the serial data register **41** in each VRAM during the vertical retrace to copy the entire contents of a first memory region in the frame buffer to a second memory region. The display control system performs the memory region copy without using the central processing unit. In this manner, the central processing unit can be used for other matters such as rendering animated objects. An embodiment of the computer display system of the present invention will be described with reference to **Figures 4, 5, 6**, and **7**.

**Figure 4** illustrates a block diagram of computer display system utilizing the teachings of the present invention. The computer display system illustrated in **Figure 4** is similar to computer display system of **Figure 2,** except that a new frame register **62**, a background frame register **63**, a control register **64**, and background copy logic **65** have been added.

The background frame register **63** is set by the CPU **53** to point to a region of memory within the VRAM array **55** containing background scene. The new frame register **62** is set by the CPU **53** to point to a "work" region in which the next frame of animation is created by the CPU **53** when performing double buffered animation. The work region is referred to as the new frame region. When requested by the CPU **53**, the background copy logic **65** copies the entire rectangular region of memory defining a background pointed to by the background frame register **63** to the new frame region pointed to by the new frame register **62** during a retrace period of the video signal.

The control register **64** is used to perform several different functions. Within the control register **64** is a copy control bit. The copy control bit is set by the CPU **63** when the program needs a background copy performed. The control register **64** is also used to enable or disable a pair of interrupts. The first interrupt controlled by the control register **64** is the vertical retrace interrupt. If the vertical retrace interrupt is enabled, the vertical retrace interrupt generates a CPU interrupt when the vertical retrace period begins. The second interrupt controlled by the control register **64** is the copy complete interrupt. If the copy complete interrupt is enabled, the copy complete interrupt generates a CPU interrupt when a background copy performed by the background copy logic is complete. The vertical retrace interrupt and the copy complete interrupt are used by animation rendering programs such that the animation rendering programs can synchronize with the background copy operation.

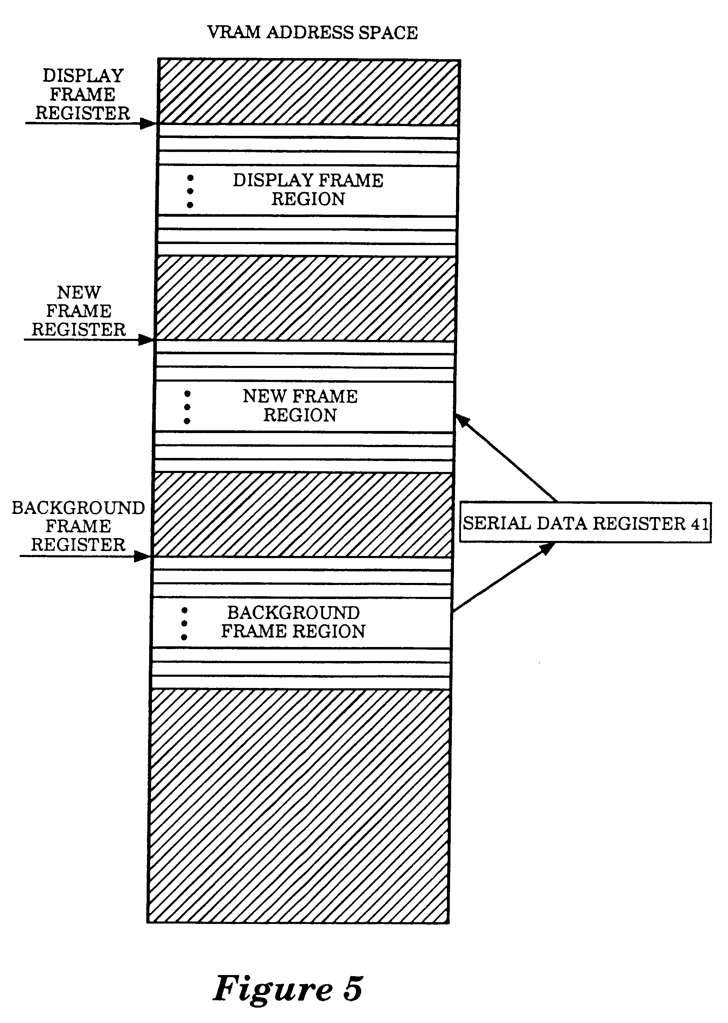

The background copy operation is best explained with the use of a flow diagram and a memory map. Referring to **Figure 5**, a memory map of the VRAM array **55** address space is illustrated. In the memory map of **Figure 5,** the display frame register **61**, a new frame register **62**, and a background frame register **63** each point to a display frame region, a new frame region, and a background frame region within the VRAM address space, respectively. The display frame region contains the frame that is currently being displayed on the display screen. The new frame region contains an animation frame that is currently under construction and will be displayed in the future. The background region contains the background scenery for the animation. The contents of the background region is copied into the new frame region before each animation frame is rendered. There may be more than one background region in memory such that several different background scenes may be available. The animation sets the background frame register to choose between several background scenes. The display frame region, the new frame region, and the background frame region are all aligned in memory.

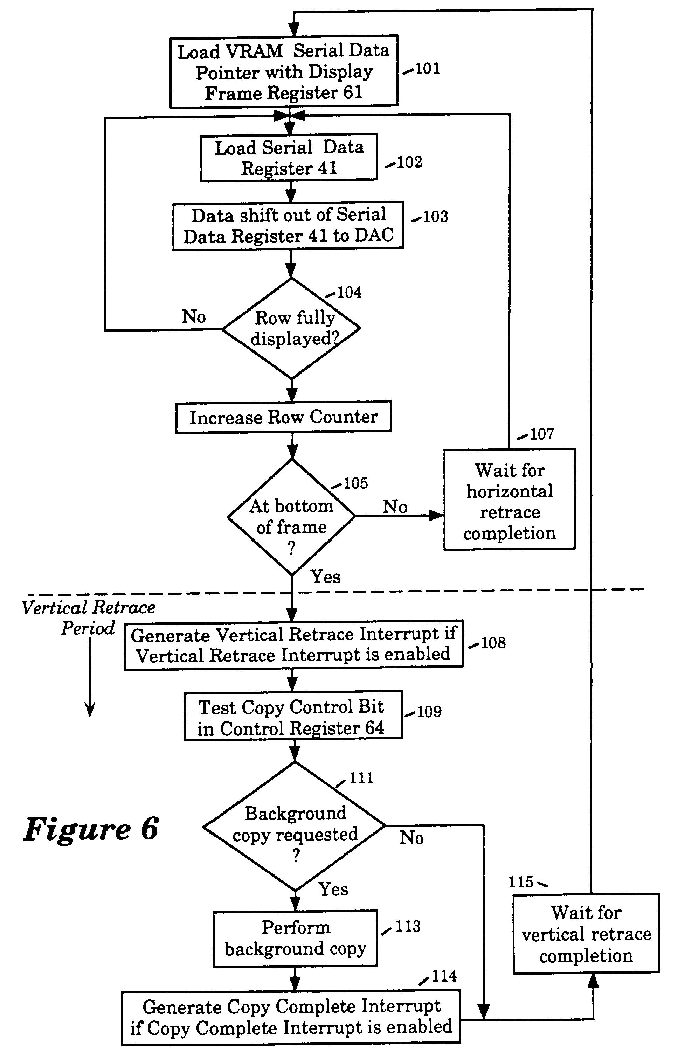

**Figure 6** provides a flow diagram that explains how the display logic **66** in the display control system **51** of the present invention operates. Referring to step **101** at the top of the flow diagram in **Figure 6**, the display logic **66** first loads the serial data pointer **45** (of **Figure 1**) in the VRAM with the contents of the display frame register **61** such that the serial data pointer **45** points to the first line in the display frame region. Next, in step **102**, the display logic **66** loads the serial data register **41** with some or all of the first horizontal line. At step **103**, the display logic **66** shifts the horizontal line data in the serial data register **41** out of the VRAM array **55** and into the digital-to-analog converter (DAC). (As indicated by step **104**, steps **102** and **103** may be repeated if the entire horizontal display line was not shifted out to the display.) At step **105**, the display logic **66** tests to see if the bottom of the display frame has been reached. If the bottom of the display frame has not been reached the display logic **66** waits for the horizontal retrace to complete and then goes back to step **102**. The display logic **66** repeats steps **102, 103, 105,** and **107**, until all the horizontal rows of data have been shifted out of the VRAM array **55** and into the digital-to-analog converter (DAC) thereby displaying a full frame.

After the display logic **66** reaches the bottom of the display frame, the display logic generates a vertical retrace interrupt at step **108** if the vertical retrace interrupt is enabled. Next, the display logic **66** tests the copy control bit in the control register **64** at step **109**. If the copy control bit in the control register **64** is set, the display control system **51** invokes the background copy logic **65** at step **113**. After the background copy has been performed, the display logic **66** generates the copy complete interrupt at step **114** if the copy complete interrupt is enabled. The copy complete interrupt informs the CPU that copy operation has completed. Finally, the display logic **66** waits at step **115** until the vertical retrace period completes and then begins shifting out another frame to the DAC **69**.

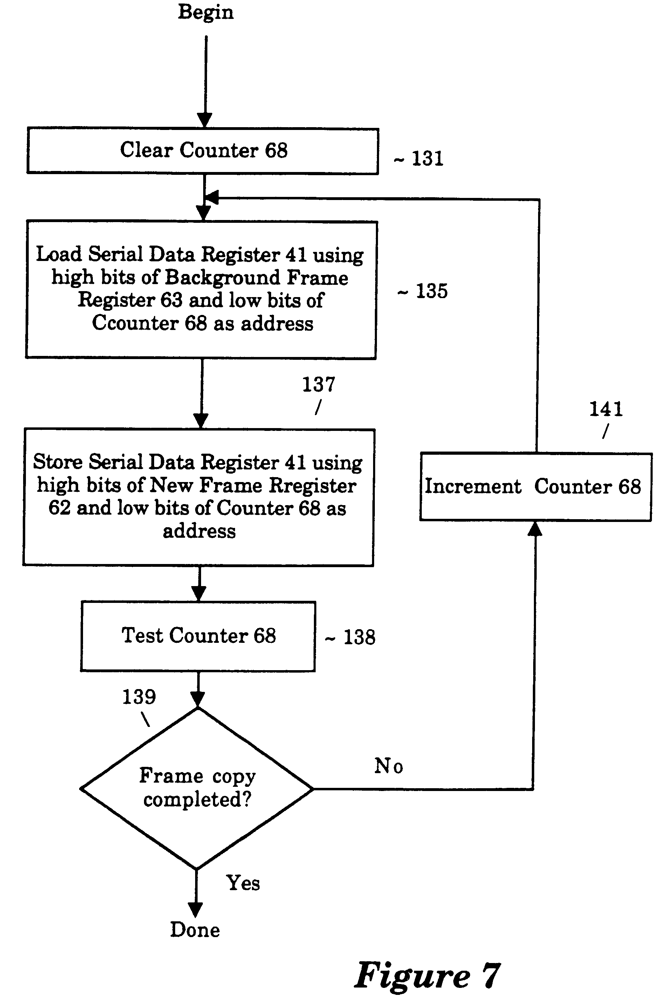

The background copy at step **113** is performed by the background copy logic **65**. **Figure 7** provides a flow diagram that explains the operation of the background copy logic **65**.

Referring to step **131** of **Figure 7**, the background copy logic **65** first clears a counter **68** that will be used in the copy process. The background copy logic **65** next loads the serial data register **41** (of **Figure 1**) in a VRAM with a first portion of the background scene at step **135**. To obtain a first portion of the background scene, the copy logic **65** creates an address that has the same upper bits of the background frame register **63** and lower bits created from the counter **68**. At step **137**, the background copy logic **65** then stores the background scene information in the serial data register **41** (of **Figure 1**) into the new frame region. To store the information in the new frame region, the copy logic **65** creates an address that has the same upper bits of the new frame register **62** and lower bits created from the counter **68**. The counter **68** is thereby used as an index into both background region and the new frame region. At steps **138** and **139**, the background copy logic **65** tests the counter **68** to see if the background copy logic **65** has copied the entire frame region. If background copy logic **65** has not copied the entire frame region, the counter **68** is increased at step **141** and the background copy logic **65** goes back to step **135**. The background copy logic **65** continues copying information from the background region into the new frame region using the counter **68** as an index until the frame copy has completed. The background copy logic therefore copies the contents of the background region into the new frame region row by row using the serial data register **41** (of **Figure 1**) as illustrated in **Figure 5**. When the background copy logic **65** reaches the bottom of the new frame region and the background region, the background copy logic **65** is done with the background copy.

In an alternate embodiment, the background copy can be performed during the horizontal retrace periods **93** as illustrated in **Figure 3a** or during both vertical and horizontal retrace periods. When using the horizontal retrace periods, the background copy logic **65** copies a small portion of the background region into the new frame region during each horizontal retrace period **93** such that the background region is copied into the new frame region piece by piece during successive horizontal retraces. After each portion is copied, the background copy logic **65** must be sure the restore state of the VRAMs in the VRAM array such that the display logic **66** is not disturbed as it scans down the display. For example, the value in the serial data register **41** and the serial data pointer **45** (in **Figure 1**) should be restored.

### Frame Buffer with Fast Copy Controller Used for Animation

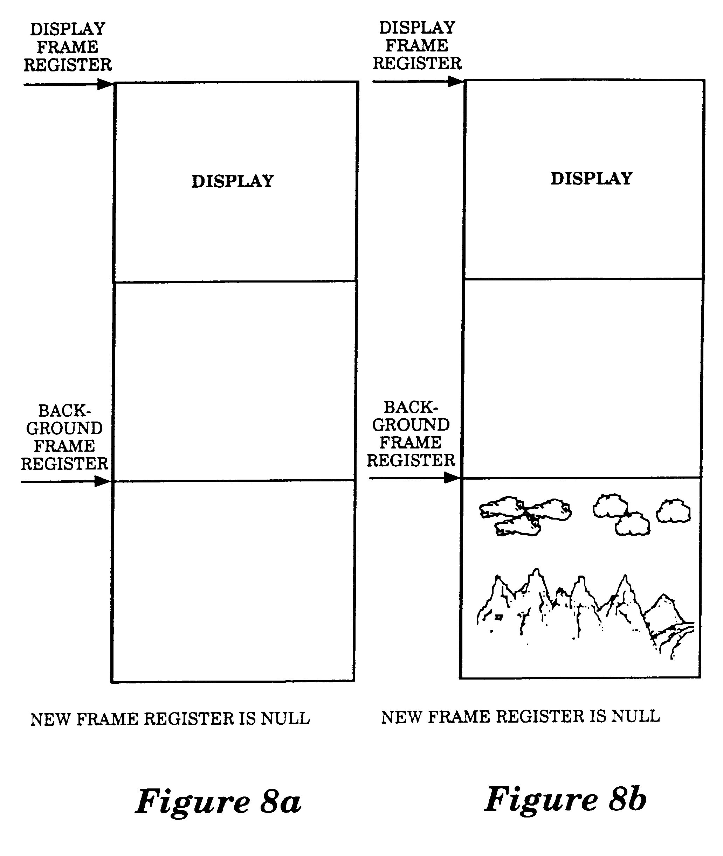

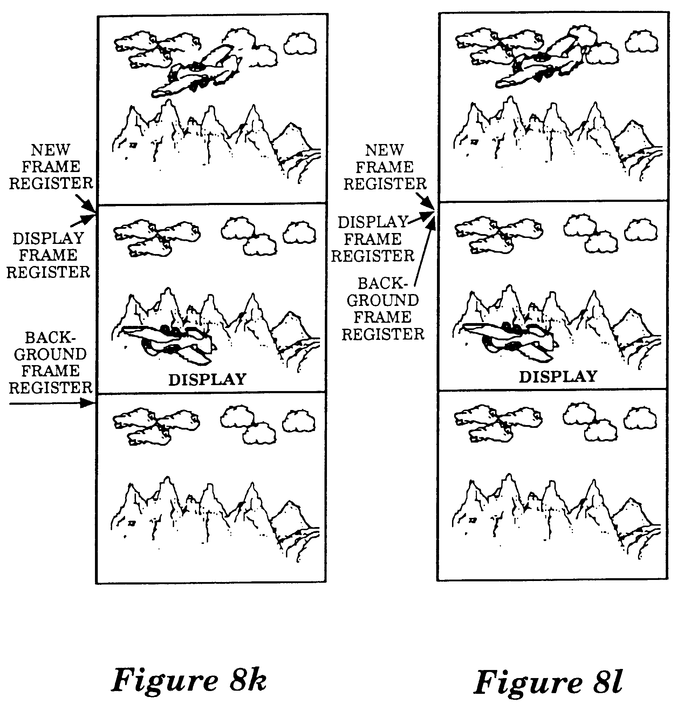

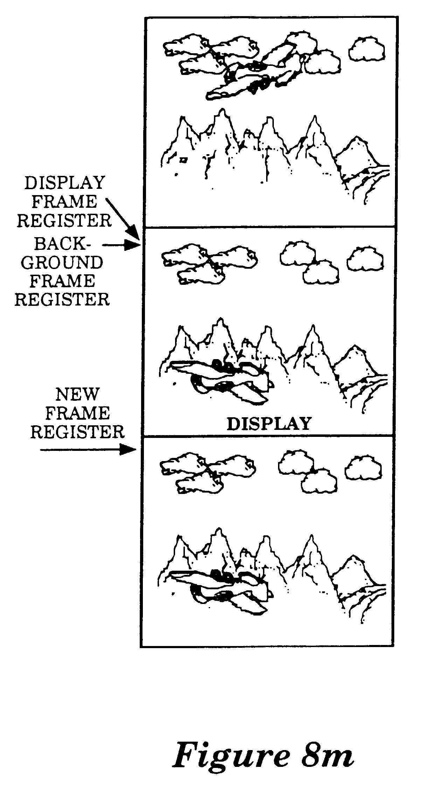

The computer display system of the present invention is ideal for improving the performance of double-buffered animation that is rendered over background scenery. **Figures 8a** through **8k** illustrate how an animation program can use the present invention to render fast double-buffered animation. In each figure, the contents of the display frame register **61**, new frame register **62**, and background frame register **63** are represented as pointers on the left side of the figure. The contents of the display frame region, new frame region, and background frame region are presented as images that are pointed to by the display frame register **61**, new frame register **62**, and background frame register **63** respectively.

The first step is to initialize the three sets of registers and memory regions that will be used. Referring to **Figure 8a**, the VRAM address space is cleared to provide a black background and the display frame register **61** and the background frame register **63** are initialized to point to a display frame region and a background frame region respectively within the VRAM **55**. The new frame register **62** is set to null since it is not yet needed. The display screen **71** always displays the display frame region pointed to by the display frame register **61**. Currently, the display frame register **61** points to a cleared-out display frame region so the screen display **71** is blank.

The next step is to create the background scene that will be used as the backdrop for the animation. **Figure 8b** illustrates the contents of the memory regions after a background mountain scene has been rendered in the background frame region. The mountain scene in the background frame region will be used to provide a background for the animation. The display screen **71** remains blank since the display frame register **61** still points to an empty display frame region.

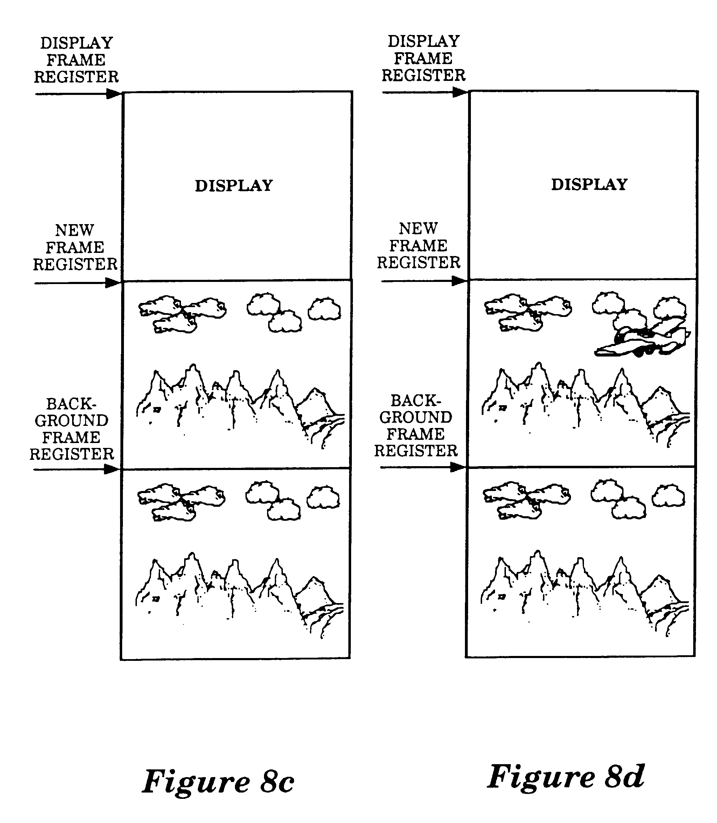

To begin rendering an animation frame, the animation software requests the display control system **51** of the present invention to copy the contents of the background frame region into a new frame region by setting the new frame register **62** to point to an unused region of memory and setting the copy control bit in the control register **64**. The display control system **51** then copies the image in the background frame region into the new frame region. **Figure 8c** illustrates the contents of the memory regions after the display control system **51** performs the background copy.

The animation software now renders the first frame of animation over the background scene in the new frame region. **Figure 8d** illustrates the contents of the memory regions after the animation software has rendered an airplane on the mountain background scene.

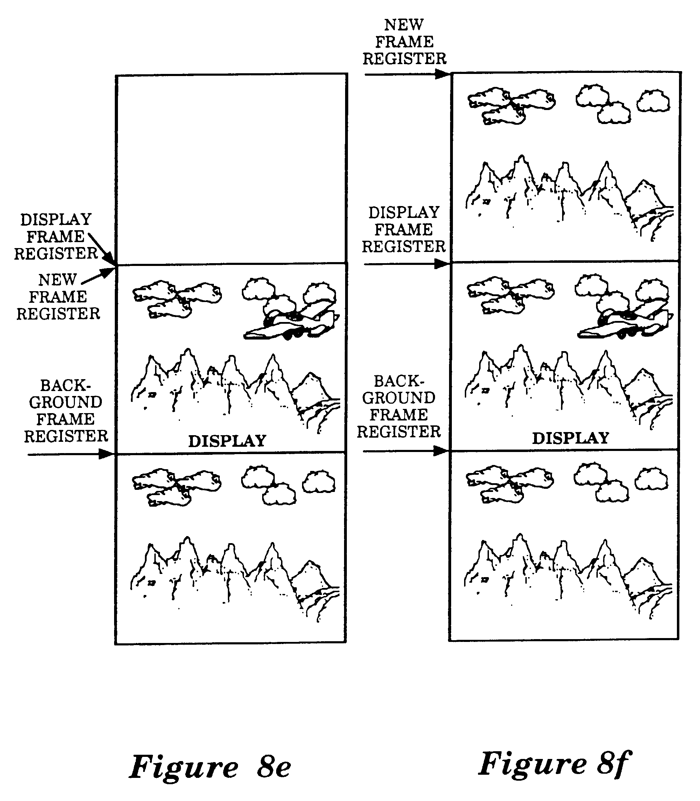

To display the first animation frame, the animation software sets the contents of the display frame register **61** to point to the memory region that contains the airplane. **Figure 8e** illustrates the contents of the memory regions after the display frame register **61** has been set to point to the first animation frame.

To generate the second animation frame, the animation software first requests the display control system **51** of the present invention to copy the background scene into an unused region of memory. The animation software performs the request by changing the new frame register **62** to point to the old (and now unused) display frame region and sets the copy control bit in the control register **64**. The old display region therefore becomes the new frame region. **Figure 8f** illustrates the contents of the memory regions after the display control system **51** copies the background scene from the background region into the new frame region.

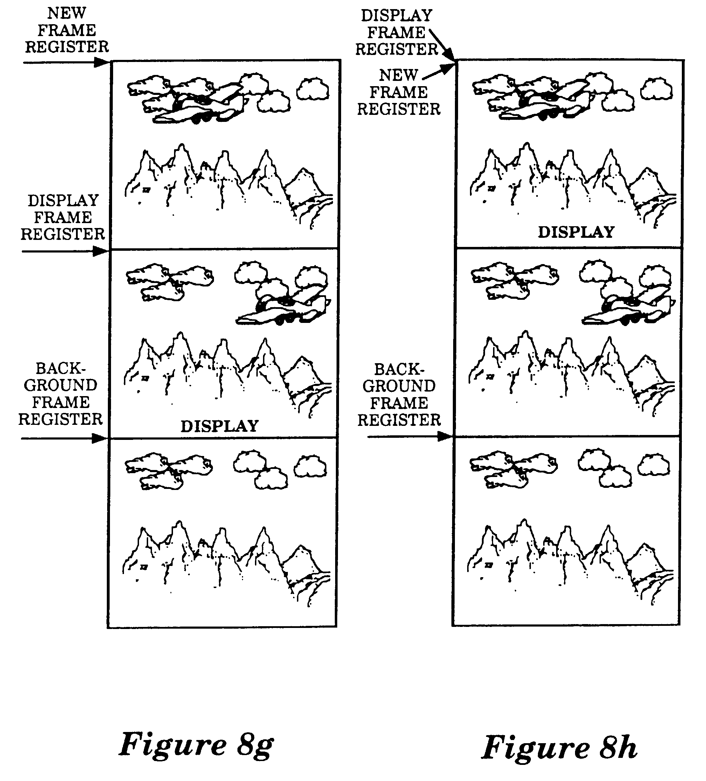

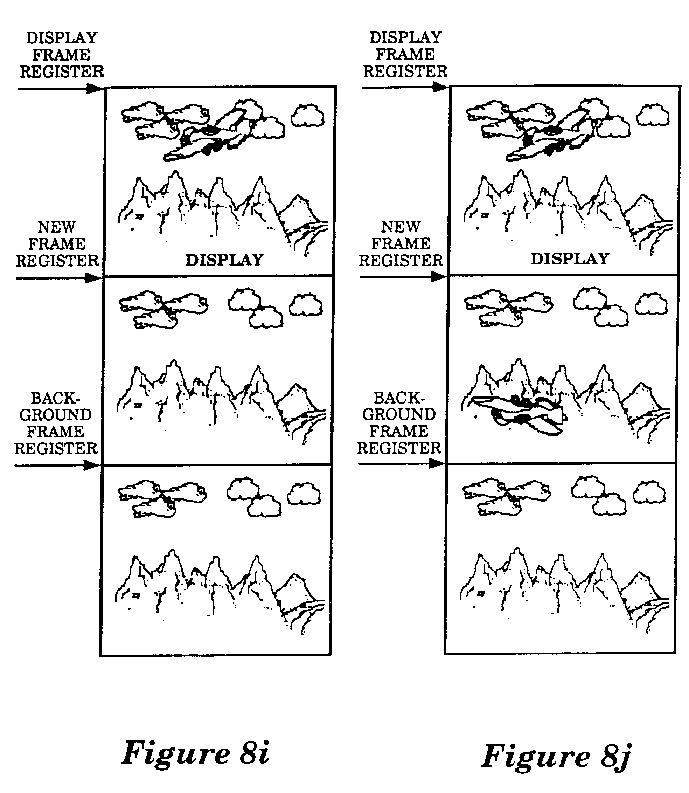

The animation software now renders the second frame of animation in the new frame region on top of the background scene. In the second animation frame, the airplane should move along the mountain background scene. The animation software therefore renders the airplane moved a little to the left. **Figure 8g** illustrates the contents of the memory regions after the animation software has rendered the second animation frame.

To display the second animation frame, the animation software sets the contents of the display frame register **61** to point to the memory region with the moved airplane. **Figure 8h** illustrates the contents of the frame buffers after the display frame register **61** has been set to point to the second animation frame.

To generate the third animation frame, the animation software requests the display control system **51** of the present invention to copy the background scene into an unused region of VRAM memory. The animation software performs the request by changing the new frame register **62** to point to the previous display frame region. The old display region therefore becomes the new frame region. **Figure 8i** illustrates the contents of the memory regions after the display control system **51** copies the background scene from the background region into the new frame region. Note that the background copy logic **65** overwrites the first frame of animation that was in that region of memory.

The animation software now renders the third frame of animation in the new frame region on top of the background scene. In the third animation frame, the airplane crashes into the mountains. The animation software therefore renders a crashed airplane on the background mountain scene. **Figure 8j** illustrates the contents of the memory regions after the animation software has rendered the third animation frame.

To display the third animation frame, the animation software sets the contents of the display frame register **61** to point to the memory region with the crashed airplane. **Figure 8k** illustrates the contents of the memory regions after the display frame register **61** has been set to point to the third animation frame.

Since it is unlikely that the crashed airplane will move in the future, the crashed airplane can become part of the background scene for future animation frames. The animation software therefore makes the airplane crash scene into the new background scene by setting the background frame register **63** to point to the region of memory that contains the airplane crash scene. **Figure 8l** illustrates the contents of the memory regions after the airplane crash scene has been made the background scene.

To generate a fourth animation frame, the animation software requests the display control system **51** to copy the background scene into an unused region of memory. The animation software performs the request by changing the new frame register **62** to point to an unused region of memory and then sets the copy control bit in the control register **64**. Since the crashed airplane will probably be a permanent fixture of the background scene, the previous mountain scene can be destroyed. Therefore the previous background region becomes the new frame region. Alternatively, the animation software could have used a new region of memory and saved the original mountain scene for future use. **Figure 8m** illustrates the contents of the memory regions after the display control system **51** copies the background scene from the background region into the new frame region. Note that the background copy logic **65** overwrites the old background scene that was in that region of memory.

The animation software continues rendering successive animation frames by changing the new frame register **62** to point to an unused region of memory to create a new frame in which to render an animation frame. After rendering the animation frame in that region of memory, the software changes the display frame register **61** to point to the newly rendered frame.

The foregoing has described a computer display system with a fast frame copy means. It is contemplated that changes and modifications may be made by one of ordinary skill in the art, to the materials and arrangements of elements of the present invention without departing from the scope of the invention as claimed.

## Claims

1. A method for generating and displaying a sequence of animation frames, said method for use with a frame buffer apparatus comprising at least three data regions, each of the data regions having contents comprising animation frame data, and said frame buffer apparatus further comprising a display region pointer, a background region pointer. and a new frame region pointer, said method comprising the following steps:
displaying, on a video display device, the contents of the data region addressed by the display region pointer;
copying the contents of the data region addressed by the background region pointer into the data region addressed by the new frame region pointer;
rendering a next frame in the sequence of animation frames;
overlaying the next frame onto the data region addressed by the new frame region pointer;
resetting the display region pointer to identify the data region addressed by the new frame region pointer;
determining whether to update the contents of the data region addressed by the background region pointer;
updating the background region pointer to refer to one of the data regions that is different than the data region addressed by the background region pointer when it is determined to update the contents of the data region addressed by the background region pointer;
resetting the new frame region pointer to identify the data region previously addressed by the display region pointer when it is determined not to update the contents of the data region addressed by the background region pointer;
iteratively repeating the foregoing steps until the sequence of animated frames has been completely displayed on the video display device.

2. The method of claim 1 wherein the step of displaying includes one or more video retrace periods, and the respective steps of copying, rendering, and overlaying are performed during said video retrace periods.

3. The method of claim 2 wherein said one or more video retrace periods include a vertical video retrace period.

4. The method of claim 2, wherein said cne or more video retrace periods include a horizontal video retrace period.

5. The method of claim 1, wherein the updating step further includes:
resetting the background region pointer to address the data region addressed by the display region pointer; and
resetting the new frame pointer to address the data region previously addressed by the background region pointer.

6. An apparatus for generating and displaying a sequence of animation frames, said apparatus comprising:
a frame buffer apparatus comprising at least three data regions, each of the data regions having contents comprising animation frame data, and the frame buffer apparatus further comprising a display region pointer, a background region pointer, and a new frame region pointer;
means for displaying, on a video display device, the contents of the data region addressed by the display region pointer;
means for copying the contents of the data region addressed by the background region pointer into the data region addressed by the new frame region pointer;
means for rendering a next frame in the sequence of animation frames;
means for overlaying the next frame onto the data region addressed by the new frame region pointer;
means for resetting the display region pointer to identify the data region addressed by the new frame region pointer;
means for determining whether to update the contents of the data region addressed by the background region pointer;
means for updating the background region pointer to refer to one of the data regions that is different than the data region addressed by the background region pointer when it is determined to update the contents of the data region addressed by the background region pointer;
means for resetting the new frame region pointer to identify the data region previously addressed by the display region pointer when it is determined not to update the contents of the data region addressed by the background region pointer;
means for iteratively repeating the foregoing steps until the sequence of animated frames has been completely displayed on the video display device.

7. The apparatus of claim 6, wherein the means for displaying include means for generating one or more video retrace periods, and the respective means for copying, rendering, and overlaying are operative during said video retrace periods.

8. The apparatus of claim 7, wherein said one or more video retrace periods include a vertical video retrace period.

9. The apparatus of claim 7 wherein said one or more video retrace periods include a horizontal video retrace period.

10. The apparatus of claim 6, wherein the updating means further includes:
means for resetting the background region pointer to address the data region addressed by the display region pointer; and
means for resetting the new frame region pointer to address the data region previously addressed by the background region pointer.

## Patentansprüche

1. Verfahren zum Generieren und Darstellen einer Sequenz von Animationsbildern, wobei das Verfahren zur Verwendung mit einer Bildpufferspeichereinrichtung mindestens drei Daten bereiche umfaßt, wobei jeder der Datenbereiche einen Inhalt aufweist, der Animationsbilddaten umfaßt, und wobei die Bildpufferspeichereinrichtung ferner einen Bildanzeige-Bereichszeiger, einen Hintergrund-Bereichszeiger und einen Folgebild-Bereichszeiger umfaßt, wobei das Verfahren die folgenden Schritte umfaßt:
Darstellen des Inhaltes des Datenbereiches, der von dem Bildanzeige-Bereichszeiger angesteuert wird, auf einer Bildschirmanzeigeeinrichtung:
Kopieren des Inhaltes des Datenbereiches, der von dem Hintergrund-Bereichszeiger angesteuert wird, in den Datenbereich, der von dem Folgebild-Bereichszeiger angesteuert wird;
Aufbereiten eines folgenden Bildes in der Sequenz von Animationsbildern;
Einblenden des folgenden Bildes in den Datenbereich, der von dem Folgebild-Bereichszeiger angesteuert wird;
Zurückstellen des Bildanzeige-Bereichszeigers zur Identifizierung des Datenbereiches, der von dem Folgebild-Bereichszeiger angesteuert wird;
Bestimmen, ob der Inhalt des Datenbereiches, der von dem Hintergrund-Bereichszeiger angesteuert wird, zu aktualisieren ist;
Aktualisieren des Hintergrund-Bereichszeigers, um auf einen der Daten bereiche zu verweisen, der anders als der Daten bereich ist, der von dem Hintergrund-Bereichszeiger angesteuert wird, wenn bestimmt wird, daß der Inhalt des Datenbereiches, der von dem Hintergrund-Bereichszeiger angesteuert wird, zu aktualisieren ist;
Rückstellen des Folgebild-Bereichszeigers, um den zuvor von dem Bildanzeige-Bereichszeiger angesteuerten Datenbereich zu identifizieren, wenn bestimmt wird, daß der Inhalt des Datenbereiches, der von dem Hintergrund-Bereichszeiger angesteuert wird, nicht zu aktualisieren ist;
iteratives Wiederholen der vorangehenden Schritte, bis die Sequenz von Animationsbildern vollständig in der Bildschirmanzeigeeinrichtung dargestellt ist.

2. Verfahren nach Anspruch 1, wobei der Schritt zum Darstellen eine oder mehrere Videorücklaufperioden enthält und die entsprechenden Schritte des Kopierens, Aufbereitens und Einblendens während der Videorücklaufperioden durchgeführt werden.

3. Verfahren nach Anspruch 2, wobei die eine oder mehrere Videorücklaufperioden eine vertikale Videorücklaufperiode enthalten.

4. Verfahren nach Anspruch 2, wobei die eine oder mehrere Videorücklaufperioden eine horizontale Videorücklaufperiode enthalten.

5. Verfahren nach Anspruch 1, wobei der Aktualisierungsschritt ferner umfaßt:
Rückstellen des Hintergrund-Bereichszeigers zum Ansteuern des Daten bereiches, der von dem Bildanzeige-Bereichszeiger angesteuert wird; und
Rückstellen des Folgebild-Zeigers zum Ansteuern des Datenbereiches, der zuvor von dem Hintergrund-Bereichszeiger angesteuert wurde.

6. Einrichtung zum Generieren und Darstellen einer Sequenz von Animationsbildern, wobei die Einrichtung umfaßt:
eine Bildpufferspeichereinrichtung, umfassend zumindest drei Datenbereiche, wobei jeder der Datenbereiche einen Inhalt aufweist, der Animationsbilddaten umfaßt, und die Bildpufferspeichereinrichtung ferner einen Bildanzeige-Bereichszeiger, einen Hintergrund-Bereichszeiger und einen Folgebild-Bereichszeiger umfaßt:
Mittel zum Darstellen des Inhaltes des Datenbereiches, der von dem Bildanzeige-Bereichszeiger angesteuert wird, auf einer Bildschirmanzeigeeinrichtung:
Mittel zum Kopieren des Inhaltes des Daten bereiches, der von dem Hintergrund-Bereichszeiger angesteuert wird, in den Daten bereich, der von dem Folgebild-Bereichszeiger angesteuert wird;
Mittel zum Aufbereiten eines folgenden Bildes in der Sequenz von Animationsbildern;
Mittel zum Einblenden des folgenden Bildes in den Datenbereich, der von dem Folgebild-Bereichszeiger angesteuert wird;
Mittel zum Rückstellen des Bildanzeige-Bereichszeigers zur Identifizierung des Datenbereiches, der von dem Folgebild-Bereichszeiger angesteuert wird;
Mittel zum Bestimmen, ob der Inhalt des Daten-bereiches, der von dem Hintergrund-Bereichszeiger angesteuert wird, zu aktualisieren ist;
Mittel zum Aktualisieren des Hintergrund-Bereichszeigers, um auf einen der Daten bereiche zu verweisen, der anders als der Daten bereich ist, der von dem Hintergrund-Bereichszeiger angesteuert wird, wenn bestimmt wird, daß der Inhalt des Datenbereiches, der von dem Hintergrund-Bereichszeiger angesteuert wird, zu aktualisieren ist;
Mittel zum Rückstellen des Folgebild-Bereichszeigers, um den zuvor von dem Bildanzeige-Bereichszeiger angesteuerten Daten bereich zu identifizieren, wenn bestimmt wird, daß der Inhalt des Datenbereiches, der von dem Hintergrund-Bereichszeiger angesteuert wird, nicht zu aktualisieren ist;
Mittel zum iterativen Wiederholen der vorangehenden Schritte, bis die Sequenz von Animationsbildern vollständig in der Bildschirmanzeigeeinrichtung dargestellt ist.

7. Einrichtung nach Anspruch 6, wobei das Mittel zum Darstellen Mittel zum Generieren einer oder mehrerer Videorücklaufperioden enthält und die entsprechenden Mittel zum Kopieren, Aufbereiten und Einblenden während der Videorücklaufperioden betriebsbereit sind.

8. Einrichtung nach Anspruch 7, wobei die eine oder mehrere Videorücklaufperioden eine vertikale Videorücklaufperiode enthalten.

9. Einrichtung nach Anspruch 7, wobei die eine oder mehreren Videorücklaufperioden eine horizontale Videorücklaufperiode enthalten.

10. Einrichtung nach Anspruch 6, wobei das Mittel zum Aktualisieren ferner umfaßt:
Mittel zum Rückstellen des Hintergrund-Bereichszeigers zum Ansteuern des Datenbereiches, der von dem Bildanzeige-Bereichszeiger angesteuert wird; und
Mittel zum Rückstellen des Folgebild-Zeigers zum Ansteuern des Datenbereiches, der zuvor von dem Hintergrund-Bereichszeiger angesteuert wurde.

## Revendications

1. Un procédé pour générer et afficher une séquence de trames d'animation, ledit procédé étant utilisé avec un appareil à mémoire tampon de trame comprenant au moins trois zones à données, chacune des zones à données ayant des contenus comprenant des données à mémoire tampon de trame d'animation, et ledit appareil à mémoire tampon de trame comprenant en outre un pointeur de zone d'affichage, un pointeur de zone d'arrière-plan et un pointeur de zone de nouvelle trame, ledit procédé comprenant les étapes suivantes consistant :
- à afficher, sur un dispositif d'affichage vidéo, le contenu de la zone de données adressée par le pointeur de zone d'affichage ;
- à copier le contenu de la zone de données adressée par le pointeur de zones d'arrière-plan dans la zone de données adressée par le pointeur de zone de nouvelle trame ;
- à calculer le rendu pour une trame subséquente dans la séquence des trames d'animation ;
- à charger la trame subséquente dans la zone de données adressée par le pointeur de zone de nouvelle trame ;
- à remettre à l'état initial le pointeur de zone d'affichage pour identifier la zone de données adressée par le pointeur de zone de nouvelle trame ;
- à déterminer s'il faut mettre à jour le contenu de la zone de données adressée par le pointeur de zone d'arrière-plan ;
- à mettre à jour le pointeur de zone d'arrière-plan pour se référer à l'une des zones de données qui est différente de la zone de données adressée par le pointeur de zone d'arrière-plan lorsqu'il est déterminé qu'il faut mettre à jour le contenu de la zone de données ayant été adressée par le pointeur de zone d'arrière-plan ;
- à remettre à l'état initial le pointeur de zone de nouvelle trame pour identifier la zone de données précédemment adressée par le pointeur de zone d'affichage lorsqu'il est déterminé qu'il ne faut pas mettre à jour le contenu de la zone de données ayant été adressés par le pointeur de zone d'arrière-plan ;
- à répéter de façon itérative les étapes précédentes, jusqu'à ce que la séquence de trames animées ait été affichée complètement sur le dispositif d'affichage vidéo.

2. Le procédé selon la revendication 1, dans lequel l'étape d'affichage inclue une ou plusieurs périodes de retour de balayage et les étapes respectives de copie, de calcul de rendu, de chargement sont exécutées durant les périodes de retour de balayage.

3. Le procédé selon la revendication 2, dans lequel ladite une ou plusieurs périodes de retour de balayage comprend une période de retour de trame.

4. Le procédé selon la revendication 2, dans lequel ladite une ou plusieurs périodes de retour de balayage comprend une période de retour de ligne.

5. Le procédé selon la revendication 1, dans lequel l'étape de mise à jour comprend en outre :
- la remise à l'état initial du pointeur de zone d'arrière-plan pour adresser la zone de données adressée par le pointeur de zone d'affichage ; et
- la remise à l'état initial le pointeur de nouvelle trame pour adresser la zone de données antérieurement adressée par le pointeur de zone d'arrière-plan.

6. Un appareil pour générer et afficher une séquence à mémoire tampon de trame d'animation ledit appareil comprenant :
- un dispositif à mémoire tampon de trame comprenant au moins trois zones de données, chacune des zones de données ayant des contenus comprenant des données à mémoire tampon de trame d'animation, et le dispositif à mémoire tampon de trame comprenant en outre un pointeur de zone d'affichage, un pointeur de zone d'arrière-plan et un pointeur de zone de nouvelle trame ;
- des moyens pour afficher sur un dispositif d'affichage vidéo le contenu de la zone de données adressée par le pointeur de zone d'affichage ;
- des moyens pour copier le contenu de la zone de données adressée par le pointeur de zone d'arrière-plan dans la zone de données adressée par le pointeur de zone de nouvelle trame ;
- des moyens pour calculer le rendu pour la trame subséquente dans la séquence de trame d'animation ;
- des moyens pour charger la trame subséquente dans la zone de données adressée par le pointeur de zone de nouvelle trame ;
- des moyens pour remettre à l'état initial le pointeur de zone d'affichage pour identifier la zone de données ayant été adressée par le pointeur de zone de nouvelle trame ;
- des moyens pour déterminer s'il faut mettre à jour le contenu de la zone de données adressée par le pointeur de zone d'arrière-plan ;
- des moyens pour mettre à jour le pointeur de zone d'arrière-plan pour se référer à l'une des zones de données qui est différente de la zone de données adressée par le pointeur de zone d'arrière-plan lorsqu'il est déterminé qu'il faut mettre à jour le contenu de la zone de données adressée par le pointeur de zone d'arrière-plan ;
- des moyens pour remettre à l'état initial le pointeur de zone de nouvelle trame dans le but d'identifier la zone de données antérieurement adressée par le pointeur de zone d'affichage lorsqu'il est déterminé qu'il n'y a pas de mise à jour du contenu de la zone de données adressée par le pointeur de zone d'arrière-plan ;
- des moyens pour répéter de façon itérative les étapes précédentes jusqu'à ce que la séquence des trames animées ait été complètement affichée sur le dispositif d'affichage vidéo.

7. L'appareil selon la revendication 6, dans lequel les moyens d'affichage comprennent des moyens pour générer une ou plusieurs périodes de retour de balayage, et les moyens respectifs de copie, de calcul du rendu et de chargement fonctionnent durant lesdites périodes de retour de balayage.

8. L'appareil selon la revendication 7, dans lequel lesdites une ou plusieurs périodes de retour de balayage comprennent une période de retour de trame.

9. L'appareil selon la revendication 7, dans lequel lesdites une ou plusieurs périodes de retour de balayage comprennent une période de retour de ligne.

10. L'appareil selon la revendication 6, dans lequel les moyens de mis à jour comprennent en outre :
- des moyens pour remettre à l'état initial le pointeur de zone d'arrière-plan pour adresser la zone de données adressée par le pointeur de zone d'affichage ; et
- des moyens pour remettre à l'état initial le pointeur de zone de nouvelle trame pour adresser la zone de données antérieurement adressée par le pointeur de zone d'arrière-plan.
